# EUROPÄISCHE PATENTANMELDUNG

(11) **EP 0 874 438 A2**
(43) Veröffentlichungstag der Anmeldung: **28.10.1998**
(21) Anmeldenummer: 98105268.1
(22) Anmeldetag: 24.03.1998
(51) Int. Cl.: H02H 11/00

(54) **Elektronische Schaltung mit Verpolschutz**

(30) Priorität: 25.04.1997 DE 19717527
(71) Anmelder: ROBERT BOSCH GMBH, 70442 Stuttgart (DE)
(72) Erfinder: Oettinger, Rolf, 71665 Vaihingen (DE); Andree, Reinhold, 71735 Eberdingen (DE)

(57) **Zusammenfassung**

Es wird eine elektronische Schaltung mit einem Verpolschutz vorgeschlagen, bei der zwischen einer Versorgungsspannungsquelle und der elektronischen Schaltung ein N-Kanal-MOS-Feldeffekttransistor (T1) geschaltet ist, bei dem die Source-Drain-Strecke in Reihe zwischen einem Ausgang der Versorgungsspannungsquelle und einem Eingang der elektronischen Schaltung liegt und das Gate (G), vorzugsweise mittels eines internen Schaltreglers (3), derart ansteuerbar ist, dass bei einer Verpolung der Versorgungsspannung (U_{B} ) ein Sperren der Source-Drain-Strecke erfolgt. Bei richtiger Polung der Versorgungsspannung (UB) hat der MOS-Feldeffekttransistor (T1) eine geringe Verlustleistung.

## Beschreibung

### Stand der Technik

Die Erfindung betrifft eine elektronische Schaltung mit einem Schutz vor Beeinträchtigungen der Schaltung bei einer Verpolung der Versorgungsspannung nach dem Oberbegriff des Hauptanspruchs.

Es ist beispielsweise aus der Firmendruckschrift 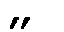 Voltage Regulator Handbook 1982", Seiten 7 bis 39, der Firma National Semiconductor Corporation bekannt, zwischen der Versorgungsspannung und einer elektronischen Schaltung eine Schutzschaltung aus Halbleiterdioden vorzusehen. Diese Halbleiterdiode kann beispielsweise am Eingang der Schaltung in Reihe geschaltet werden, so dass der Eingangsstrom I_{b} nur in der Durchlassrichtung der Halbleiterdiode fließen kann. Wird die Versorgungsspannung falsch gepolt sperrt die Halbleiterdiode den Stromfluss.

In dieser bekannten Schutzschaltung können beispielsweise bei einer Anwendung für elektronische Schaltungen zur AnSteuerung von Leistungsbauelementen Ströme von 2,5A bis 3A fließen, wobei dann ein Spannungsabfall von ca. 0,7V in der Durchlassrichtung an der Halbleiterdiode eine Verlustleistung von ca. 2W erzeugt. Diese relativ hohen Verlustleistungen verursachen bei empfindlichen elektronischen Schaltungen thermische Probleme.

Bei einer Variante der bekannten Schutzschaltung mit einer parallel zu den Polen der Versorgungsspannung geschalteten Halbleiterdiode ist es nachteilig, dass hier eine Sicherung (zum Beispiel eine Schmelzsicherung) in Reihe geschaltet werden muss, die bei einer falschen Polung, die die Halbleiterdiode in Durchlassrichtung - quasi als Kurzschluss - betreibt, den Stromfluss unterbricht. Im Normalbetrieb mit richtiger Polung der Versorgungsspannung entsteht hier zwar keine Verlustleistung, jedoch muss nach einer falschen Polung der Versorgungsspannung die Sicherung ausgewechselt werden, was bei kompakten elektronischen Schaltungen sehr hinderlich ist.

### Vorteile der Erfindung

Eine elektronische Schaltung der eingangs beschriebenen Art ist mit den erfindungsgemäßen Merkmalen des Kennzeichens des Hauptanspruchs dadurch vorteilhaft, dass durch den Einsatz eines MOS-Feldeffekttransistors ein Verpolschutz erreicht wird, der im Normalfall der richtigen Polung und eines Stromflusses durch die Source-Drain-Strecke eine äußerst geringe Verlustleistung in der Größenordnung von 0,18 W aufweist.

Besonders kostengünstige und platzsparende MOS-Feldeffekttransistoren sind gemäß der bevorzugten Ausführungsform in N-Kanal-Technologie ausgeführt. Zum Durchsteuern der Source-Drain-Strecke des MOS-Feldeffekttransistors benötigt dieser eine Gate-Spannung, die größer ist als die Versorgungsspannung U_{B}, die am Source-Anschluss anliegt, da die Gate-Spannung positiv gegenüber der Source-Spannung sein muß. Die für sich bekannten Parameter von MOS-Feldeffekttransistoren sind beispielsweise in U.Tietze/Ch.Schenk, 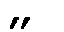 Halbleiterschaltungstechnik", 5.Auflage 1980, Springer-Verlag Berlin Heidelberg New York, Seiten 77 bis 88 beschrieben.

Die erfindungsgemäße Schaltung kann in vorteilhafter Weise zur Ansteuerung von elektromagnetischen Hydraulikventilen in mobilen oder in stationären Maschinen, wie zum Beispiel in Werkzeugmaschinen, pressen oder Spritzgießmaschinen dienen. Da zu Wartungs- oder Reparaturzwecken von Zeit zu Zeit Eingriffe in die Steuerungselektronik vorgenommen werden müssen, ist eine Vertauschung der Polarität der Versorgungsspannung beim Anschluss der Schaltung an die Versorgungsspannung durch das Servicepersonal nicht immer auszuschließen. Um die hierdurch verursachte Fehlfunktion oder Zerstörung der Schaltung und eventuell auch der angeschlossenen Aggregate zu verhindern, ist ein Schutz der elektronischen Schaltung notwendig.

Bei der erfindungsgemäßen Ausführungsform mit einem N-Kanal-MOS-Feldeffekttransistor kann in besonders vorteilhafter Weise eine dynamische Ansteuerung des Gates dadurch bewerkstelligt werden, dass die positive Gate-Source-Spannung nicht über eine üblicherweise notwendige separate Spannungs-Pumpschaltung erzeugt wird, sondern aus der, vor Verpolung zu schützenden Schaltung selbst gewonnen wird.

Insbesondere beim Einsatz der elektronischen Schaltung zur Ansteuerung von Hydraulikventilen enthält die Schaltung zur Eigenversorgung interne Spannungsstabilisierungsschaltungen in getakteter Schaltreglerbauweise, die die benötigte Gate-Spannung auf einfache Weise erzeugen können.

Es ist mit der Erfindung auf jeden Fall ein Verpolschutz erreicht, der nur äußerst geringe Verlustwärme erzeugt, was insbesondere bei weitgehend integrierten und gekapselten Schaltungsanordnungen zur Leistungssteuerung von elektromechanischen Bauteilen wichtig ist, da hier die Verlustwärme nur schwer wieder abgeführt werden kann.

Besonders vorteilhaft ist außerdem, dass die erfindungsgemäße Anordnung eines N-Kanal-MOS-Feldeffekttransistors auch einen bidirektionalen Stromfluss, bei entsprechender Ansteuerung des Gates, ermöglicht. Beispielsweise kann eine Rückspeisenergie beim Abschalten von Verbrauchern die Lastinduktivitäten aufweisen (z.B. Magnetventile) am Ausgang der elektronischen Schaltung zur Versorgungsspannungsquelle zurückgeleitet werden. Hiermit kann die relativ niedrige Quellimpedanz der Versorgungsspannungsquelle mit externen Stützkondensatoren vorteilhaft ausgenutzt werden und somit die Rückspeisenergie aufgefangen werden.

Vorteilhaft ist auch der erfindungsgemäße reverse Betrieb des MOS-Feldeffekttransistors, da hier die Gate-Source-Spannung nicht separat begrenzt werden muss. Aufgrund der Kombination des Verpolschutzes mit dem internen Schaltregler kann die Gate-Source-Spannung nie größer als die stabilisierte Ausgangsspannung des Schaltreglers werden; somit wird auch keine überschüssige Energie in den Gatekreis des MOS-Feldeffekttransistors gefördert.

Andere vorteilhafte Weiterbildungen der Erfindung sind in den Unteransprüchen angegeben.

### Zeichnung

Ein Ausführungsbeispiel der erfindungsgemäßen elektronischen Schaltung mit einem Verpolschutz wird anhand der Zeichnung erläutert. Es zeigen:
Figur 1 ein Prinzipschaltbild einer elektronischen Schaltung mit einem MOS-Feldeffekttransistor als Verpolschutz;
Figur 2 zeigt ein detaillierteres Ausführungsbeispiel der Anordnung nach Figur 1 und
Figur 3 Spannungsverläufe beim Betrieb der elektronischen Schaltung.

### Beschreibung des Ausführungsbeispiels

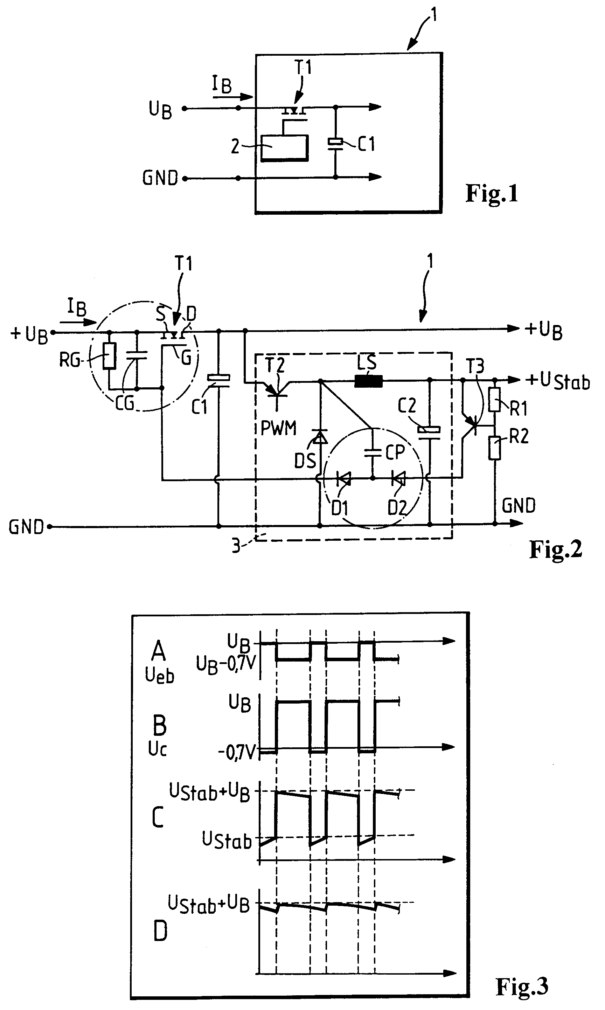

In der Figur 1 ist ein Prinzipschaltbild mit einer elektronischen Schaltung 1 gezeigt, die an einem Eingang mit einer Versorgungsspannung U_{B} beaufschlagt und mit einem anderen Eingang an Masse GND gelegt ist. In die Schaltung fließt eine Strom I_{B}; die Schaltung kann ausgangsseitig, wie in der Beschreibungseinleitung erwähnt, beispielsweise zur Ansteuerung von elektromagnetischen Hydraulikventilen dienen.

Um im Falle einer Verpolung der Versorgungsspannung U_{B} die Schaltung 1 zu schützen, ist ein N-Kanal-MOS-Feldeffekttransistor T1 mit seiner Source-Drain-Strecke in den Stromkreis geschaltet. Die Steuerung des Stromflusses, d.h. im Normalfall den möglichst widerstandslosen Durchlass des Stromes I_{B} und im Fall einer Verpolung die Sperrung, erfolgt über eine entsprechende Gate-Spannung, die mittels einer Gate-Spannungserzeugungsschaltung 2 gewonnen wird. Ein Kondensator C1 dient der Glättung der Spannung U_{B}.

Figur 2 zeigt ein detaillierteres Schaltbild der elektronischen Schaltung 1. Der MOS-Feldeffekttransistor T1 weist hier zwischen seinem Source-Anschluss S und seinem Gate-Anschluss G noch eine Parallelschaltung aus einem Widerstand RG und einem Kondensator CG auf; der Drain-Anschluss D ist direkt an den Ausgang der elektronischen Schaltung 1 durchgeführt. Die Ansteuerung des Gates G erfolgt über einen Schaltregler 3, der zur Gewinnung einer stabilisierten Spannung U_{Stab} in der elektronischen Schaltung schon zu anderen Zwecken vorhanden ist.

Der Schaltregler 3, dessen Funktion für sich gesehen auch aus dem in der Beschreibungseinleitung erwähnten Fachbuch 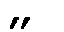 Halbleiterschaltungstechnik", Seiten 390 bis 395 bekannt ist, weist einen Schalttransistor T2, eine Schaltinduktivität LS, eine Diode DS und einen Glättungskondensator C2 auf.

Der Verpolschutz mit dem MOS-Feldeffekttransistor T1 wird mittels eines Transistors T3, Widerständen R1 und R2, Dioden D1 und D2 sowie eines Pumpkondensators CP realisiert. Der Transistor T3 liegt mit seinem Emitter an der Spannung U_{Stab} und mit seinem Kollektor über die zwei in Reihe geschalteten Dioden D1 und D2 am Gate des MOS-Feldeffekttransistors T1. Die Basis des Transistors T3 liegt an einem Spannungsteiler aus den Widerständen R1 und R2 zwischen der Spannung U_{Stab} und GND und der Pumpkondensator CP ist zwischen einem Anschlusspunkt zwischen den Dioden D1 und D2 und dem Kollektor des Transistors T2 geschaltet.

Im folgenden soll die Funktion, insbesondere im Hinblick auf den Schutz der Schaltung 1 vor einer Verpolung, unter Bezug auf die Spannungsdiagramme nach Figur 3 erläutert werden. Nach einem Einschalten der Versorgungsspannung +U_{B} mit der richtigen Polung hat der MOS-Feldeffekttransistor T1 noch keine Gate-Spannung, so dass er im Sperrzustand ist. Allerdings weist der MOS-Feldeffekttransistor T1 eine parasitäre Substratdiode auf (der Substratanschluss befindet sich im Transistorschaltzeichen zwischen dem Source- und dem Drain-Anschluss und ist in der Regel mit dem Source-Anschluss verbunden), die die Source-Drain-Strecke des MOS-Feldeffekttransistors T1 für den Fall, dass eine positive Spannung am Source-Anschluss liegt, leitend macht und somit wie eine bipolare Diode wirkt.

Sobald sich die Spannung U_{B} am Emitter des Transistors T2 aufgebaut hat beginnt der Schaltregler 3 zu arbeiten. Die Emitter-Basis-Spannung U_{eb} des Transistors T2 ist im Diagramm A der Figur 3 dargestellt. Der Schalttransistor T2 wird hierbei im Takt eines sogenannten pulsbreitenmodulierten Signals PWM (pulse with modulated signal) in Abhängigkeit von der Abweichung der stabilisierten Spannung U_{stab} vom Sollwert so geöffnet, dass am Kollektor des Schalttransistors T2 ein entsprechendes Rechtecksignal nach dem Diagramm B der Figur 3 ansteht.

Um die erforderliche größere Spannung (größer als +U_{B}) am Gate G des MOS-Feldeffekttransistors T1 zu gewinnen, die zu einer dauerhaften, nahezu widerstandslosen Durchschaltung der Source-Drain-Strecke führt, tritt die sog. Pumpschaltung in Aktion. Der Pumpkondensator CP wird nunmehr in der sog. Lowphase des Rechtecksignals nach dem Diagramm B zunächst auf die Spannung U_{Stab} aufgeladen und in der anschließenden Highphase um die Spannung U_{B} zusätzlich angehoben (vgl. Diagramm C der Figur 3), so dass eine Maximalspannung U_{B} + U_{Stab} entstehen kann. Es steht in diesem Betriebszustand somit immer eine Spannung von +U_{Stab} bezogen auf +U_{B} am Gate des MOS-Feldeffekttransistors T1 an solange der Schaltregler 3 arbeitet.

Bei einer richtigen Polung der Versorgungsspannung U_{B} arbeitet der MOS-Feldeffekttransistor T1 also im sog. reversen Durchlassbetrieb; im Fall einer falschen Polung der Versorgungsspannung U_{B} bleibt der MOS-Feldeffekttransistor T1 gesperrt, da hier der interne Schaltregler 3 überhaupt nicht zu arbeiten beginnt und keine Gate-Spannung erzeugt wird.

## Patentansprüche

1. Elektronische Schaltung mit einem Verpolschutz,
- bei der zwischen einer Versorgungsspannungsquelle und der elektronischen Schaltung ein Halbleiterbauelement geschaltet ist, **dadurch gekennzeichnet, dass**
- das Halbleiterbauelement ein MOS-Feldeffekttransistor (T1) ist, bei dem die Source-Drain-Strecke in Reihe zwischen einem Ausgang der Versorgungsspannungsquelle und einem Eingang der elektronischen Schaltung geschaltet ist und das Gate (G) derart ansteuerbar ist, das bei einer Verpolung der Versorgungsspannung (U_{B} ) ein Sperren der Source-Drain-Strecke bewirkt wird.

2. Elektronische Schaltung nach Anspruch 1, **dadurch gekennzeichnet, dass**
- der MOS-Feldeffekttransistor (T1) in N-Kanal-Technologie ausgeführt ist und eine Steuerspannung für das Gate (G) des MOS-Feldeffekttransistors (T1) mittels einer Gate-Spannungserzeugungsschaltung (2) erzeugbar ist.

3. Elektronische Schaltung Anspruch 2, **dadurch gekennzeichnet, dass**
- Bestandteil der elektronischen Schaltung (1) ein Schaltregler (3) ist, der für den Einsatz der Schaltung (1) unabhängig vom Verpolschutz vorgesehen ist, wobei mit dem Schaltregler (3) Spannungen erzeugbar sind aus der die, gegenüber der Versorgungsspannung (U_{B}), größere Gate-Spannung herleitbar ist.

4. Elektronische Schaltung Anspruch 3, **dadurch gekennzeichnet, dass**
- die Gate-Spannung des MOS-Feldeffekttransistors (T1) aus der Ausgangsspannung (U_{stab}) des Schaltreglers 3 über eine Reihenschaltung der Emitter-Kollektor-Strecke eines Transistors (T3) und zwei Dioden (D1,D2) erzeugt wird, wobei die Basis des Transistors (T3) an eine Spannungsteilerschaltung parallel zum Ausgang des Schaltreglers angeschlossen ist und der Verbindungspunkt der beiden Dioden (D1,D2) über einen Pumpkondensator (CP) an den ersten Anschluss einer Induktivität des Schaltreglers geführt ist.

5. Elektronische Schaltung Anspruch 3 oder 4, **dadurch gekennzeichnet, dass**
- im Fall einer richtigen Polung die Gate-Spannung des MOS-Feldeffekttransistors (T1) aus der stabilisierten Ausgangsspannung (U_{stab}) des Schaltreglers (3) besteht, die auf die Versorgungsspannung (U_{B}) aufgesetzt ist.

6. Elektronische Schaltung Anspruch 4 oder 5, **dadurch gekennzeichnet, dass**
- zwischen dem Source- (S) und dem Gate-Anschluss (G) des MOS-Feldeffekttransistors (T1) eine Parallelschaltung aus einem Widerstand (RG) und einem Kondensator (CG) liegt.

7. Elektronische Schaltung nach einem der vorhergehenden Ansprüche, **dadurch gekennzeichnet, dass**
- die elektronische Schaltung (1) zur Ansteuerung von einem oder mehreren Hydraulikventilen vorgesehen ist.
